# EUROPEAN PATENT APPLICATION

(11) **EP 4 737 163 A1**
(43) Date of publication of application: **06.05.2026**
(21) Application number: 25207106.3
(22) Date of filing: 07.10.2025
(51) Int. Cl.: B60K 1/04, B60K 15/03, B60K 6/20

(54) **ARCHITECTURE FOR HYBRID MINING TRUCKS**

(30) Priority: 01.11.2024 US 202418934822
(71) Applicant: Cummins, Inc., Columbus, Indiana 47201 (US)
(72) Inventor: Richards, Kieran J., West Haddon, NN6 7ET (GB)
(74) Representative: Cleveland Scott York

(57) **Abstract**

Architectures of heavy equipment vehicles, such as mining trucks, are presented herein for hybridization of such vehicles. For example, the architectures provided herein may relate to the placement of a battery pack module, a hydraulic liquid tank, a second liquid tank such as a fuel tank, and various components required for operation of a hybrid mining truck.

## Description

### TECHNICAL FIELD OF THE PRESENT DISCLOSURE

The present disclosure relates to architectures, or component arrangement, of hybrid mining trucks. In particular, the present disclosure relates to the arrangement of vehicle components for the retrofitting or first fitting of mining trucks for operation of the mining trucks using hybrid powertrain systems.

### BACKGROUND OF THE PRESENT DISCLOSURE

Environmental and efficiency considerations have resulted in the electrification of vehicles across industries and purposes. While electric and hybrid passenger and cargo vehicles are becoming more commonplace, electrification and/or hybridization of large equipment vehicles poses its own set of challenges. For example, large equipment vehicles, such as mining trucks, cranes, bulldozers, etc. may require a workload and/or have a sheer size component that make implementation of alternative powertrains more difficult. Additionally, the components required for hybridization and/or electrification of such vehicles may be difficult to arrange due to the space available relative to the respective vehicle for mounting such components.

### SUMMARY OF THE PRESENT DISCLOSURE

Architectures of heavy equipment vehicles, such as mining trucks, are presented herein for hybridization of such vehicles. For example, the architectures provided herein may relate to the placement of a battery pack module, a hydraulic liquid tank, a second liquid tank such as a fuel tank, and various components required for operation of a hybrid mining truck.

The invention is set out in the appended set of claims.
In a first aspect of the disclosure, a mining haul truck is provided. The mining haul truck includes a chassis; a first wheel coupled to a first side of the chassis at a first forward position; a second wheel coupled to the first side of the chassis at a first rearward position; a third wheel coupled to a second side of the chassis at a second forward position; and a fourth wheel coupled to the second side of the chassis at a second rear ward position. The first wheel and the second wheel define a first space therebetween. The third wheel and the second wheel define a second space therebetween. The mining truck also includes a hydraulic tank coupled to the chassis within the second space and a fuel tank coupled to the chassis within the second space.

In another aspect of the disclosure, a mining haul truck is provided. The mining haul truck includes a chassis having a first longitudinal frame member on a first side of the chassis extending from a first end of the chassis to a second end of the chassis and a second longitudinal frame member on a second side of the chassis extending from the first end of the chassis to a second end of the chassis. The first longitudinal frame member and the second longitudinal frame member define a first space therebetween. The mining truck also includes a first wheel coupled to a first side of the chassis at a first forward position; a second wheel coupled to the first side of the chassis at a first rearward position; a third wheel coupled to a second side of the chassis at a second forward position; and a fourth wheel coupled to the second side of the chassis at a second rearward position. The first wheel and the second wheel define a second space therebetween. The third wheel and the fourth wheel define a third space therebetween. The mining haul truck further includes an internal combustion engine positioned in the first space and a battery pack module coupled to the chassis within the second space.

In yet another aspect of the disclosure, a mining haul truck is provided. The mining haul truck includes a chassis supporting a deck on a forward position thereof; a resistor grid positioned in a first region associated with a first side of the deck; an operator cab positioned in a second region associated with a second side of the deck; and a DC/DC system positioned in the first region in a forward position relative to the resistor grid. The DC/DC system and the resistor grid define a space therebetween. The mining haul truck also includes a thermal management system positioned at least partially in the space.

In another aspect of the disclosure, a mining haul truck is provided. The mining haul truck includes a chassis supporting a deck on a forward portion thereof; a resistor grid positioned in a first region associated with a first side of the deck; an operator cab positioned in a second region associated with a second side of the deck; a DC/DC system positioned on the resistor grid; and a thermal management system positioned at least partially in the first region.

In yet another aspect of the disclosure, a mining haul truck is provided. The mining haul truck includes a chassis supporting a deck on a forward portion thereof; a resistor grid and a DC/DC system positioned in a first region associated with a first side of the deck; an operator cab positioned in a second region associated with a second side of the deck; and a floor space of the deck defined partially within the first region and partially within the second region, the floor space configured to receive an on-board trolley system.

In another aspect of the disclosure, a mining haul truck is provided. The mining haul truck includes a chassis supporting a deck on a forward position thereof. The deck has a first deck side corresponding with a first chassis side and a second deck side corresponding with a second chassis side. The mining haul truck also includes a battery pack module coupled to the first chassis side and a thermal management system at least partially positioned on the first deck side. The thermal management system includes a first fluid route to the battery pack module.

In yet another aspect of the disclosure, a method of assembling a mining haul truck is provided. The mining haul truck includes a chassis, a first wheel and a second wheel mounted to a first side of the chassis, and a third wheel and a fourth wheel mounted to a second side of the chassis. The method includes mounting a hydraulic liquid tank to the chassis at a first position between the first wheel and the second wheel and mounting a second liquid tank to the chassis at a second position between the first wheel and the second wheel.

In another aspect of the disclosure, a method of assembling a mining haul truck is provided. The mining haul truck includes a chassis, a first wheel and a second wheel mounted to a first side of the chassis, and a third wheel and a fourth wheel mounted to a second side of the chassis. The method includes mounting a hydraulic tank to the chassis at a first position between the first wheel and the second wheel and mounting a battery pack module to the chassis at a second position between the third wheel and the fourth wheel.

In yet another aspect of the disclosure, a method of assembling a mining haul truck is provided. The mining haul truck includes a chassis, a deck supported by a forward portion of the chassis, a first wheel and a second wheel mounted to a first side of the chassis, and a third wheel and a fourth wheel mounted to a second side of the chassis. The method includes mounting a resistor grid on the deck at a first position and mounting a thermal management system on the deck at a second position forward of the resistor grid.

In various aspects of the disclosure, the mining haul truck may further include a second fuel tank positioned in the second space. The mining haul truck may further include a third fuel tank positioned in the first space.

In various aspects of the disclosure, the mining haul truck may further include a second fuel tank positioned in the first space.

In various aspects of the disclosure, the mining haul truck may further include a battery pack module coupled to the chassis in the first space.

In various aspects of the disclosure, the fuel tank may contain diesel fuel.

In various aspects of the disclosure, the hydraulic tank may be coupled to the chassis adjacent to the chassis at an interior position and the fuel tank may be coupled to the chassis adjacent to the hydraulic tank at an exterior position so that the hydraulic tank is positioned between the chassis and the fuel tank.

In various aspects of the disclosure, the mining haul truck may further include at least one fluid tank coupled to the chassis within the third space. The at least one fluid tank may include a hydraulic tank and a fuel tank.

In various aspects of the disclosure, the battery pack module may be coupled to a thermal management system and a DC/DC system. The thermal management system and the DC/DC system may be supported by the chassis on a forward position thereof.

In various aspects of the disclosure, the battery pack module and the first wheel may define a first clearance area therebetween.

In various aspects of the disclosure, the battery pack module and the second wheel may define a second clearance area therebetween.

In various aspects of the disclosure, the battery pack module may include a plurality of battery pack layers in a vertical arrangement. Each battery pack layer of the plurality of battery pack layers may include at least one battery pack.

In various aspects of the disclosure, the mining haul truck may further include a radiator mounted on a first end portion of the chassis adjacent a first end of the chassis.

In various aspects of the disclosure, the mining haul truck may further include an inverter cabinet positioned at a rearward position of the deck. The inverter cabinet may be positioned partially in the first region and partially in the second region.

In various aspects of the disclosure, the deck may define a space at a forward position configured to receive an on-board trolley system.

In various aspects of the disclosure, the thermal management system may be fluidly coupled to the DC/DC system.

In various aspects of the disclosure, the mining haul truck may further include a radiator positioned at a full forward position of the deck.

In various aspects of the disclosure, the thermal management system may be fluidly coupled to a battery pack module. The battery pack module may be coupled to the chassis between a first wheel and a second wheel. The first wheel and the second wheel may both be positioned on a first side of the chassis.

In various aspects of the disclosure, the thermal management system may be positioned at a forward position relative to the resistor grid.

In various aspects of the disclosure, the DC/DC system may be in a forward position relative to the resistor grid. The thermal management system may be positioned at least partially between the DC/DC system and the resistor grid.

In various aspects of the disclosure, the mining haul truck may further include a hydraulic liquid tank coupled to the second chassis side. The mining haul truck may further include a second liquid tank coupled to the second chassis side. The second liquid tank may be a fuel tank.

In various aspects of the disclosure, the mining haul truck may further include a DC/DC system positioned on the first deck side. The thermal management system may include a second fluid route to the DC/DC system.

In various aspects of the disclosure, the thermal management system may be in a rearward position relative to the DC/DC system.

In various aspects of the disclosure, the mining haul truck may further include a resistor grid in a rearward position relative to the DC/DC system.

In various aspects of the disclosure, the mining haul truck may further include a resistor grid positioned beneath the DC/DC system.

In various aspects of the disclosure, the method may include mounting a third liquid tank to the chassis at a third position between the third wheel and the fourth wheel.

In various aspects of the disclosure, the method may include mounting a vehicle subsystem at a third position between the second wheel and the fourth wheel. The vehicle subsystem may be at least one of an aftertreatment system and an exhaust muffler.

In various aspects of the disclosure, the hydraulic liquid tank may be mounted to the chassis between the chassis and the second liquid tank.

In various aspects of the disclosure, the method may further include mounting a second liquid tank to the chassis at a third position between the first wheel and the second wheel.

In various aspects of the disclosure, the method may further include coupling the battery pack module toa thermal management system and a DC/DC system. The thermal management system and the DC/DC system may be supported by a deck. The deck may be supported by the chassis on a forward position thereof.

In various aspects of the disclosure, the method may further include mounting a vehicle subsystem between the second wheel and the fourth wheel. The vehicle subsystem may be an aftertreatment system.

In various aspects of the disclosure, the method may further include mounting a DC/DC system in a forward position relative to the resistor grid. Mounting the DC/DC system in the forward position relative to the resistor grid may include mounting the DC/DC system in a forward position relative to the thermal management system.

In various aspects of the disclosure, the method may further include mounting a DC/DC system on top of the resistor grid.

In various aspects of the disclosure, the method may further include fluidly coupling the thermal management system to a battery pack module. The method may further include mounting the battery pack module to the chassis at a first position between the first wheel and the second wheel.

In various aspects of the disclosure, the method may further include mounting an on-board trolley system to the deck.

Additional features and advantages of the present disclosure will become apparent to those skilled in the art upon consideration of the following detailed description of the illustrative embodiments exemplifying the disclosure as presently perceived.

### BRIEF DESCRIPTION OF THE DRAWINGS

The detailed description of the drawings particularly refers to the accompanying figures in which:
FIG. **1** is a schematic top-down illustration of an architecture arrangement of components of a mining truck;
FIG. **2** is a perspective view illustration of an exemplary chassis and components mounted thereon;
FIG. **3** illustrates a schematic top-down illustration of another architecture arrangement of components of a mining truck;
FIG. **4** illustrates a schematic side view illustration of the architecture arrangement of FIG. **3****;**
FIG. **5** illustrates a second schematic side view illustration of the architecture arrangement of FIG. **3****;**
FIG. **6** illustrates a top-down schematic illustration of a battery pack module relative to a chassis and a plurality of wheels of a mining truck with the plurality of wheels in a first configuration;
FIG. **7** illustrates a top-down schematic illustration of the battery pack module of FIG. **6** with the plurality of wheels in a second configuration;
FIG. **8** illustrates a top-down schematic illustration of another architecture arrangement of components of a mining truck;
FIG. **9** illustrates a top-down schematic illustration of an arrangement of zones on a deck of a mining truck;
FIG. **10** illustrates a side view schematic illustration of an architecture arrangement of a mining truck including a trolley system; and
FIG. **11** is an illustration of a mining truck including a trolley system.

Although the drawings represent embodiments of various features and components according to the present disclosure, the exemplification set out herein illustrates an embodiment, and such an exemplification is not to be construed as limiting the scope of the disclosure in any manner.

### DETAILED DESCRIPTION OF THE DRAWINGS

For the purposes of promoting an understanding of the principles of the present disclosure, reference will now be made to the embodiments illustrated in the drawings, which are described herein. The embodiments disclosed herein are not intended to be exhaustive or to limit the invention to the precise form disclosed. Rather, the embodiments are chosen and described so that others skilled in the art may utilize their teachings. Therefore, no limitation of the scope of the claimed invention is thereby intended. The present invention includes any alterations and further modifications of the illustrated devices and described methods and further applications of principles in the invention which would normally occur to one skilled in the art to which the invention relates.

The terms "couples", "coupled", "coupler" and variations thereof are used to include both arrangements wherein the two or more components are in direct physical contact and arrangements wherein the two or more components are not in direct contact with each other (e.g., the components are "coupled" via at least a third component), but yet still cooperate or interact with each other.

In some instances throughout this disclosure and in the claims, numeric terminology, such as first, second, third, fourth, etc., is used in reference to various components of features. Such use is not intended to denote an ordering of the components or features. Rather, numeric terminology is used to assist the reader in identifying the components or features being referenced and should not be narrowly interpreted as providing a specific order of components or features.

While the disclosure herein is provided in terms of a "mining truck", it is understood that the features described herein may apply to other vehicles, including heavy equipment such as cranes, bulldozers, excavators, etc., locomotives, and other appropriate vehicles.

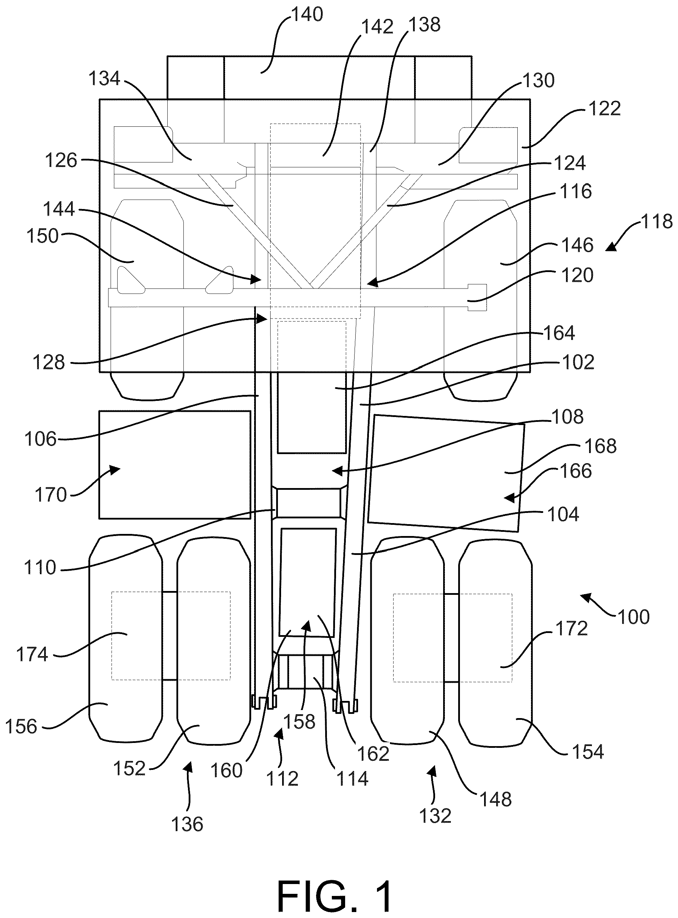

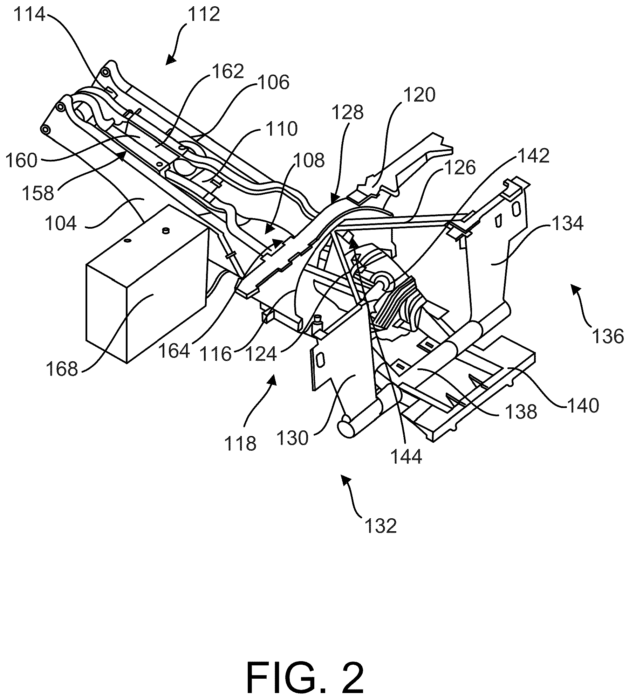

A schematic architecture of an exemplary mining truck **100** is illustrated in FIG. **1****.** As shown, mining truck **100** may be generally built on and/or around chassis **102.** Referring additionally to FIG. **2****,** chassis **102** may include a first frame member **104** and a second frame member **106** extending longitudinally from a first end portion of the chassis, including a first end of the chassis, to a second end portion of the chassis, including a second end of the chassis, to at least partially define a length of mining truck **100.** First frame member **104** and second frame member **106** may be spaced apart to form a space **108** therebetween, with a central crossbeam **110** extending from first frame member **104** to second frame member **106** across space **108,** generally defining a rear chassis region **112.** A rear crossbeam **114** may extend from first frame member **104** to second frame member **106** across space **108** at the rear of chassis **102,** and a horse collar **116** may connect first frame member **104** and second frame member **106** within a forward region **118** of chassis **102.**

A third frame member **120** may extend across the top of horse collar **116** and beyond the diameter of horse collar **116** to form a support for a deck **122** (FIG. **1**) as described further herein. A first supplemental frame member **124** and a second supplemental frame member **126** may each extend diagonally from a central portion **128** of third frame member **120** above horse collar **116** in opposite directions so that first supplemental frame member **124** may connect to a first support plate **130** and second supplemental frame member **126** may connect to a second support plate **134.** First support plate **130** may also connect to first frame member **104** on a first side **132** of chassis **102,** and second support plate **134** may also connect to second frame member **106** on a second side **136** of chassis **102.**

A forward crossbeam **138** may extend from first frame member **104** to second frame member **106** in general alignment with first support plate **130** and second support plate **134.** A support extension **140** may extend forward of forward crossbeam **138.** An engine **142** may be positioned within an opening **144** defined by horse collar **116.** A traction alternator and/or gearbox may be mounted rearward of engine **142** within area **164.**

Referring again to FIG. **1****,** wheels **146, 148, 150,** and **152** may be mounted to chassis **102** via respective axles (not shown). For example, as shown, first wheel **146** may be mounted at a forward position in forward region **118** on first side **132** of chassis **102.** Second wheel **148** may be mounted at a rearward position in rear region **112** on first side **132** of chassis **102.** Third wheel **150** may be mounted at a forward position in forward region **118** on second side **136** of chassis **102.** Fourth wheel **152** may be mounted at a rearward position in rear region **112** on second side **136** of chassis **102.** In some embodiments, mining truck **100** may include a fifth wheel **154** mounted adjacent to second wheel **148** at a rearward position in rear region **112** on first side **132** of chassis **102.** Some embodiments may additionally include a sixth wheel **156** mounted adjacent to fourth wheel **152** at a rearward position in rear region **112** on second side **136** of chassis **102.** First wheel **146** and third wheel **150** may be mounted at a position generally corresponding to third frame member **102.**

A rear region space **158** defined between first frame member **104** and second frame member **106** within rear chassis region **112,** and at least partially defined between second wheel **148** and fourth wheel **152,** may be sized and shaped to receive a vehicle subsystem **160.** For example, as shown in FIG. **2****,** vehicle subsystem **160** may include an aftertreatment system **162.** In other embodiments, vehicle subsystem **160** may include a battery module, a fuel tank, a powertrain support subsystem, an exhaust muffler, an exhaust silencer, or any other vehicle subsystems necessary or otherwise desired for operation of mining truck **100.** As described herein, an exhaust muffler and an exhaust silencer may be similar or the same components intended to quiet an exhaust by some volume. In other embodiments, rear region space **158** may be free of any vehicle subsystems or components.

First wheel **146** and second wheel **148** may define a space, or first side saddle **166** therebetween. In some embodiments, as illustrated in FIGS. **1-2****,** a fuel tank **168** may be mounted to chassis **102** within first side saddle **166.** Fuel tank **168** may contain, for example, diesel fuel or an alternative fuel, e.g., ammonia, methanol, ethanol, or other fuels suitable for operation of mining truck **100.** Likewise, third wheel **150** and fourth wheel **152** may define a space, or second side saddle **170.** A first wheel motor **172** may be associated with second wheel **148** and, in embodiments including a fifth wheel, fifth wheel **154.** A second wheel motor **174** may be associated with fourth wheel **152** and, in embodiments including a sixth wheel, sixth wheel **156.** In some embodiments including a fifth and/or sixth wheel, each of second wheel **148,** fourth wheel **152,** fifth wheel **154,** and sixth wheel **156** may have a separate wheel motor. In other embodiments, all of wheels **146, 148, 150, 152, 154,** and **156** or wheels **146, 148, 150, 152,** or any combination thereof, may be associated with a wheel motor, whether such wheel motor is designated to a single wheel or such wheel motor is shared between two or more wheels.

Still referring to FIG. **1****,** deck **122** may be supported by chassis **102,** and, for example, by third frame member **120,** first support plate **130,** and second support plate **134.** In other words, deck **122** may be supported by the first end portion of chassis **102,** wherein the first end portion of chassis **102** includes a first end of chassis **102.** Deck **122** may be configured to support a cab to facilitate operation of mining truck **100** and various vehicle subsystems, including hybrid powertrain subsystems and components as discussed further herein.

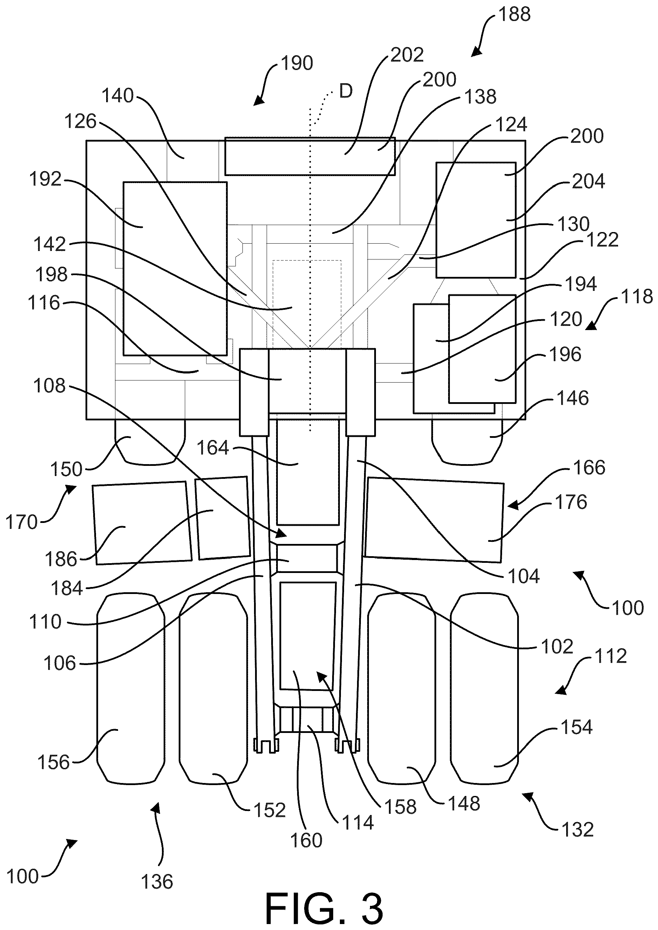

Now referring to FIGS. **3-5****,** a second exemplary architecture for mining truck **100** is illustrated. Mining truck **100** as illustrated in FIG. **3-5** includes the same components and details as described in relation to FIGS. **1** and/or **2** except as described further herein, with like components associated with like reference numbers.

As described above, mining truck **100** may include chassis **102** having first frame member **104** and second frame member **106.** First wheel **146** may be mounted at a forward position in forward region **118** on first side **132** of chassis **102,** i.e., adjacent to first frame member **104.** Second wheel **148** may be mounted at a rearward position in rear region **112** on first side **132** of chassis **102,** i.e., adjacent to first frame member **104,** and spaced apart from first wheel **146** to define first side saddle **166** therebetween. A battery pack module **176** may be mounted to first side **132** of chassis **102** within first side saddle **166.**

Battery pack module **176** may be configured to store power for use in operation of mining truck **100.** In hybrid applications, battery pack module **176** may cooperate with engine **142** to provide power to wheels **146, 148, 150, 152** and, in some embodiments, wheels **154, 156** for movement of mining truck **100.** Battery pack module **176** may be mounted within first side saddle **166** at a position which mitigates potential contact of any one of wheels **146, 148, 150, 152, 154** (when present) and/or **156** (when present).

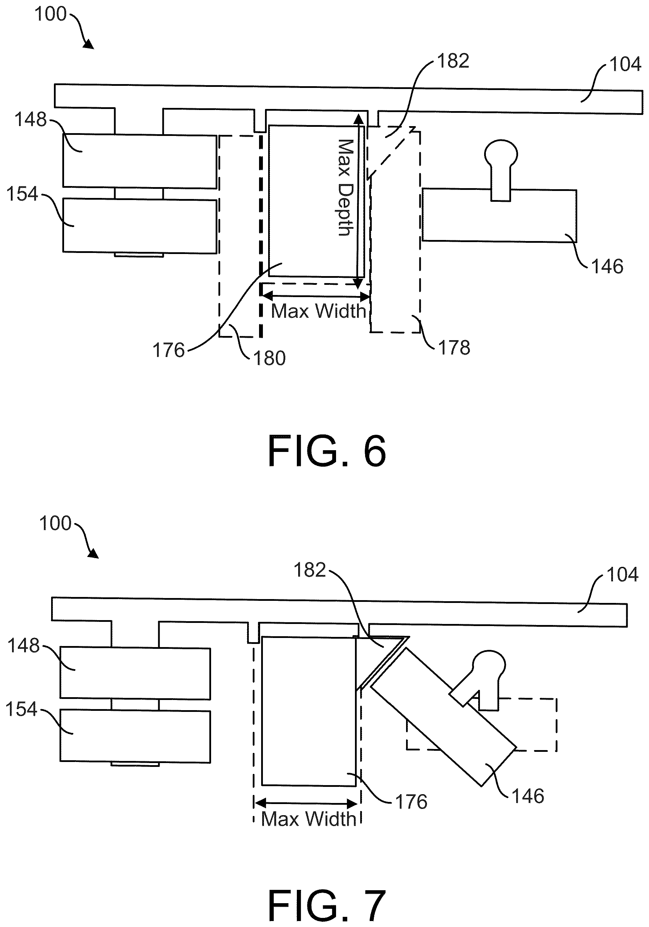

As shown in FIGS. **6-7****,** for example, battery pack module **176** may be mounted to chassis **102** in a manner that defines a forward access zone **178** defined between first wheel **146** and battery pack module **176** and a rearward access zone **180** defined between battery pack module **176** and second wheel **148.** Forward access zone **178** and rearward access zone **180** provides clearance for movement of the wheels during operation of the mining truck, and also provides clearance for an operator, mechanic, or another person to stand within the appropriate access zone **178, 180** for access to battery pack module **176** for maintenance or other required or desired tasks.

A steering zone, or additional access zone **182,** may be defined adjacent to a forward inner pocket to ensure additional clearance for the steering of first wheel **146** during operation of mining truck **100** as shown in FIG. **7****.** Additional access zone **182** may also provide additional clearance for the operator, mechanic, or another person to access battery pack module **176** for maintenance or other required or desired tasks. For example, in some embodiments, battery pack module **176** may be mounted to mining truck **100** (e.g., via chassis **102**) in a manner so that an access to battery pack module **176** is generally positioned in or adjacent to additional access zone **182.**

Mounting of battery pack module **176** within first side saddle **166** may facilitate an even balance of mining truck **100** when one or more tanks are also mounted to chassis **102** within second side saddle **170** as discussed further herein. This placement may also maximize space for battery positioning while allowing the batteries to be put in a single, unified space rather than distributed in several places over the architecture of mining truck **100.** For example, in some embodiments, battery pack module **176** may include a plurality of battery pack layers in a vertical arrangement, where each battery pack layer of the plurality of battery pack layers includes one or more battery packs. This vertical arrangement of battery packs as positioned in a side saddle may take advantage of a height of mining truck **100** to include as many battery packs as necessary for efficient operation of mining truck **100** in a hybrid operation mode. While these benefits are acknowledged, it is also within the scope of this disclosure that battery pack module **176** and/or a plurality of battery packs may be alternately positioned, whether in a single, unified space (i.e., on deck **122,** within rear region space **158,** or another placement), or in a plurality of places throughout architecture of mining truck **100.**

Referring again to FIGS. **3-5****,** a hydraulic liquid tank **184** may be mounted to second side **136** of chassis **102** within second side saddle **170.** Hydraulic liquid tank **184** may serve as a reservoir for containing excess hydraulic fluid for operation of mining truck **100** and/or serve to hold a supply of hydraulic fluid for operation of mining truck **100.** A second liquid tank **186** may be mounted to chassis **102** within second side saddle **170.** In some embodiments, second liquid tank **186** may be a fuel tank.

As illustrated, hydraulic liquid tank **184** may be mounted to chassis **102** at an interior position of second side saddle **170,** while second liquid tank **186** may be mounted to chassis **102** at an exterior position of second side saddle **170,** so that hydraulic liquid tank **184** is substantially in-between the chassis and the second liquid tank **186.** In other embodiments, hydraulic liquid tank **184** and second liquid tank **186** may be alternately arranged. For example, in some embodiments, second liquid tank **186** may be mounted to chassis **102** at an interior position of second side saddle **170,** while hydraulic liquid tank **184** may be mounted to chassis **102** at an exterior position of second side saddle **170.** In yet other embodiments, hydraulic liquid tank **184** and second liquid tank **186** may both be arranged at a generally interior position of second side saddle **170** so that one of hydraulic liquid tank **184** and second liquid tank **186** is positioned at a forward position near third wheel **150,** and the other of the hydraulic liquid tank **184** and second liquid tank **186** is positioned at a rearward position near fourth wheel **152.**

In some embodiments, a third liquid tank, for example, a second fuel tank, may be mounted to the chassis **102** within the second side saddle **170.** In other embodiments, the second fuel tank may be mounted to chassis **102** within the first side saddle **166** in place of or in tandem with battery pack module **176.**

Although the embodiments described above include mounting of battery pack module **176** within first side saddle **166** with hydraulic liquid tank **184** and second liquid tank **186** mounted within second side saddle **170,** other arrangements may be considered that also enjoy at least some of the advantages discussed above. For example, in some embodiments, battery pack module **176** may be mounted within second side saddle **170** adjacent to hydraulic liquid tank **184** while second liquid tank **186** is mounted to chassis **102** within first side saddle **166.** In other embodiments, hydraulic liquid tank **184** may remain in second side saddle **170,** second liquid tank **186** may be mounted to chassis **102** within first side saddle **166,** and battery pack module **176** may be mounted to deck **122.**

Rear region space **158** defined by chassis **102** between second wheel **148** and fourth wheel **152** may include a vehicle subsystem **160** mounted therein, such as an aftertreatment system, a heating system for a bed of mining truck **100,** and/or an exhaust muffler. In some embodiments, rear region space **158** may remain empty of any vehicle subsystems. It is within the scope of the disclosure that other subsystems beyond those listed explicitly herein may be mounted within rear region space **158.**

As discussed above, deck **122** may be supported at a forward position by chassis **102.** Deck **122** may include a first region **188** associated with a first side of deck **122** corresponding with first side **132** of chassis **102** and a second region **190** associated with a second side of deck **122** corresponding with second side **136** of chassis **102.** First region **188** and second region **190** are illustrated by dividing line "**D**". An operator cab **192** may be arranged within second region **190** of deck **122.** Operator cab **192** is configured to house an operator during operation of mining truck **100,** along with controls necessary or desired for said operation of mining truck **100.**

A resistor grid **194** may be arranged within first region **188** of deck **122** and may be positioned at a generally rearward position of first region **188** of deck **122.** A DC/DC system **196** may be positioned on top of resistor grid **194** so that DC/DC system **196** and resistor grid **194** are in a vertically stacked arrangement. An inverter cabinet **198** may be positioned at least partially in first region **188** of deck **122** and at least partially in second region **190** of deck **122.** For example, inverter cabinet **198** may be equally positioned in first region **188** and second region **190** or, in some embodiments, be positioned so that a majority of inverter cabinet **198** is in first region **188.** In other embodiments, inverter cabinet **198** may be positioned so that a majority of inverter cabinet **198** is in second region **190.** As illustrated, inverter cabinet **198** may be positioned within a rear portion of deck **122.** The positioning of inverter cabinet **198** in this manner may provide an open area for positioning of additional mining truck components, for example, as described further herein.

Still referring to FIGS. **3-5****,** mining truck **100** may further include a thermal management system **200.** Thermal management system **200** may include a radiator **202** and a DC/DC-battery thermal manager **204.** In some embodiments, radiator **202** and DC/DC-battery thermal manager **204** may be integrated, i.e., one thermal management component may serve as both radiator **202** and DC/DC-battery thermal manager **204.** In other embodiments, radiator **202** may service both engine **142** and DC/DC system **196,** while battery thermal manager **204** only services battery pack module **176.** In yet other embodiments, radiator **202** may service engine **142,** battery thermal manager **204** may service battery pack module **176,** and a third thermal manager or heat exchanger (not shown) may service DC/DC system **196.**

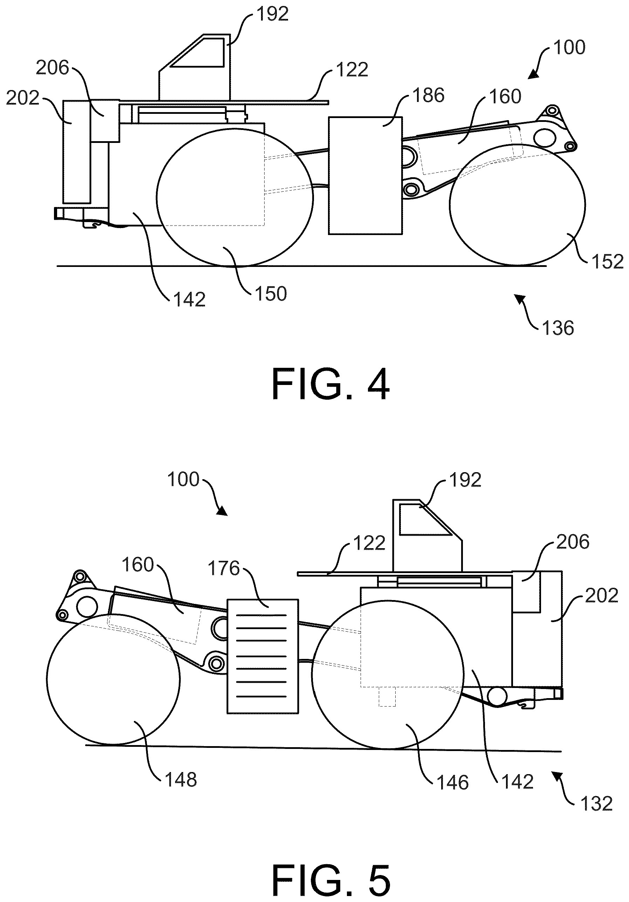

As illustrated, radiator **202** may be mounted to a front of mining truck **100,** or, in other words, at a full forward position relative to deck **122.** For example, radiator may be mounted at the first end portion of chassis **102** adjacent the first end of chassis **102.** In some embodiments, radiator **202** may be, at least in part, mounted to a forward edge of deck **122** so that radiator **202** extends downward from deck **122.** In other embodiments, radiator **202** may be mounted to a front of mining truck **100** below deck **122.** In yet other embodiments, radiator **202** may be mounted at another position of mining truck **100.** Referring specifically to FIGS. **4-5****,** an air cleaner **206** may be integrated with or positioned immediately adjacent to radiator **202** between radiator **202** and engine **142** to mitigate the presence of dirt, dust, and other contaminants within engine **142,** mounted within horse collar **116** of chassis **102.**

DC/DC-battery thermal manager **204** may be positioned on deck **122** within first region **188** at a forward position of resistor grid **194** and/or DC/DC system **196.** DC/DC-battery thermal manager **204** may be configured to be fluidly coupled to battery pack module **176** to provide coolant or refrigerated liquid to battery pack module **176,** and, in some embodiments, may be fluidly coupled to DC/DC system **196** to provide thermal management services to DC/DC system **196.**

The arrangement of components on the deck as described herein are exemplary in nature and may be altered within the scope of the disclosure. For example, in some embodiments, first region **188** and second region **190** may be mirrored or switched. In other embodiments, components may be moved relative to one another and/or relative to deck **122.** Positioning of the components of the deck as described herein may mitigate damage and/or poor performance from dust, dirt, mud, and/or other environmental considerations. Furthermore, placement of such components on deck **122** in combination with mounting of battery pack module **176,** hydraulic liquid tank **184,** and second liquid tank **186** in respective side saddles **166, 170** facilitates weight balance of mining truck **100.** However, other placements are within the scope of the disclosure.

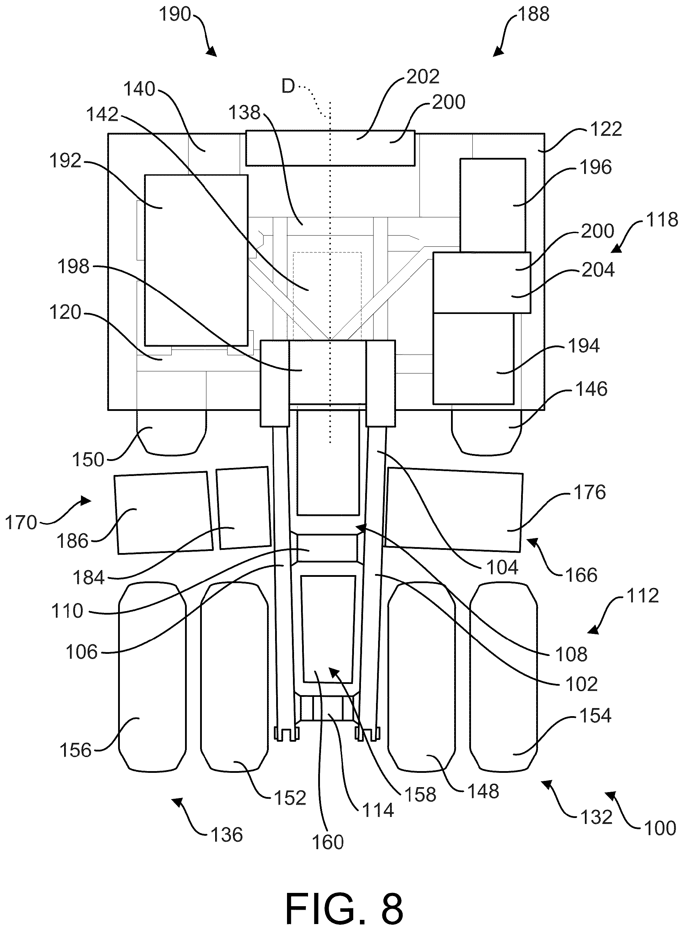

Now referring to FIG. **8****,** a third exemplary architecture for mining truck **100** is illustrated. Mining truck **100** as illustrated in FIG. **8** includes the same components and details as described in relation to FIGS. **1-5** except as described further herein, with like components associated with like reference numbers.

Resistor grid **194** may be arranged within first region **188** of deck **122** and may be positioned at a generally rearward position of first region **188** of deck **122.** DC/DC-battery thermal manager **204** may be positioned forward of resistor grid **194,** with DC/DC system **196** positioned forward of DC/DC-battery thermal manager **204**, so that DC/DC-battery thermal manager **204** is positioned generally between resistor grid **194** and DC/DC system **196.** The positioning of the components herein provides access to service panels on top of resistor grid **194,** while further accounting for positioning of DC/DC-battery thermal manager **204** in an efficient position relative to DC/DC system **196** and battery pack module **176** mounted within first side saddle **166.**

The arrangement of components as described in relation to FIG. **8** may also mitigate interference with line-of-sight to side mirrors (not shown) of mining truck **100** from operator cab **192** positioned within second region **190** of deck **122.** The arrangement of components on the deck as described herein are exemplary in nature and may be altered within the scope of the disclosure. For example, in some embodiments, first region **188** and second region **190** may be mirrored or switched. In other embodiments, components may be moved relative to one another and/or relative to deck **122.**

Positioning of the components of the deck as described herein may mitigate damage and/or poor performance from dust, dirt, mud, and/or other environmental considerations. Furthermore, placement of such components on deck **122** in combination with mounting of battery pack module **176,** hydraulic liquid tank **184,** and second liquid tank **186** in respective side saddles **166, 170** facilitates weight balance of mining truck **100.** However, other placements are within the scope of the disclosure.

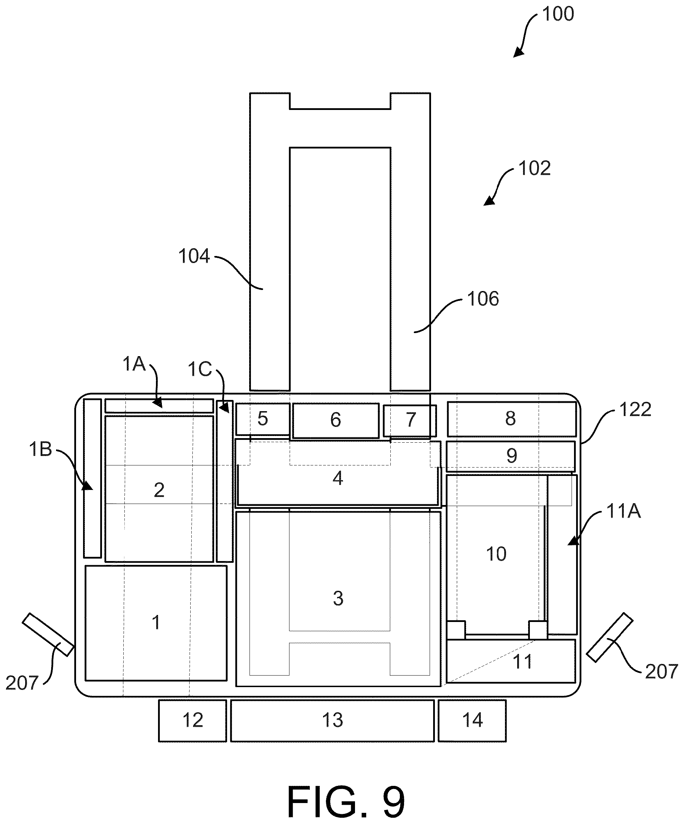

Now referring to FIG. **9****,** in reference to FIGS. **1-8** above, the positioning of components upon deck **122** of mining truck **100** are further provided in reference to possible requirements of each individual component. In other words, FIG. **9** provides an arrangement of components on deck **122** along with reference to zoned areas for component operation during operation of mining truck **100.**

Zone **2** may include a resistor grid, such as resistor grid **194,** and may be positioned within first region **188** of deck **122** at a generally rearward portion of deck **122** within first region **188.** Space around zone **2** may be defined, for example, within zones **1**, and **1a** to facilitate grid exhaust of resistor grid **194** and zones **1b** and **1c** to facilitate air intake for resistor grid **194.** In other embodiments described above, wherein DC/DC system **196** and/or DC/DC-battery thermal manager **204** is positioned forward of resistor grid **194,** a space may be defined between resistor grid **194** and the other of DC/DC system **196** or DC/DC-battery thermal manager **204** to facilitate grid exhaust of resistor grid **194.** In other embodiments, such component may be positioned immediately forward of resistor grid **194,** with resistor grid exhaust being otherwise concentrated in zone **1a**.

Zone **4** may include an inverter cabinet, such as inverter cabinet **198,** containing main electrical systems and controls of mining truck **100,** and may be positioned at least partially in first region **188** of deck **122** and at least partially in second region **190** of deck **122.** For example, zone **4** may be equally positioned in first region **188** and second region **190** or, in some embodiments, be positioned so that a majority of zone **4** is in first region **188.** In other embodiments, zone **4** may be positioned so that a majority of zone **4** is in second region **190.** Zone **4** may be spaced apart from zone **2** for at least zone **1c** to facilitate air intake for resistor grid **194.** Zone **4** may be positioned at the rearmost position of deck **122.** In some embodiments, as illustrated, zone **6** may be positioned rearward of zone **4** and include blower ducting to provide main traction blower direction from above inverter cabinet **198.** Electrical wiring and blowers may further be positioned within zones **5** and **7.** Open space zone **3** may be defined in forward of zone **4** to facilitate access to inverter cabinet **198,** operator cab **192** in zone **10,** and positioning and access to other components such as a trolley system as described further herein. For example, zone **3** may include pylon scaffolding for connection to upper pylons in embodiments including trolley systems.

Zone **10** may include operator cab **192** and may be arranged within second region **190** of deck **122.** Operator cab **192** is configured to house an operator during operation of mining truck **100,** along with controls necessary or desired for said operation of mining truck **100.** Zones **11** and **11a** around zone **10** may remain open to facilitate operator visibility during operation of mining truck **100.** For example, zone **11** may facilitate operator visibility forward of mining truck **100.** Zone **11a** may facilitate operator visibility of rearview mirror **207**. Zone **11a** may further facilitate operator exit from operator cab **192.** As discussed above, zone **3** may also provide access to operator cab **192.**

Zone **9** may be positioned rearward of operator cab **10** within second region **190** of deck **122** and include a brake and/or hydraulic cabinet. The brake and/or hydraulic cabinet may provide service and maintenance access to brake and/or hydraulic systems of mining truck **100.** Zone **8** may be an open space positioned rearward zone **9** to provide access to the brake and/or hydraulic cabinet. In some embodiments, emergency supplies such as fire extinguishers or other supplies may be stored within zone **8.**

Radiator **202** may be mounted to mining truck **100** forward of deck **122** in zone **13.** In some embodiments, radiator **202** may be mounted to the forward edge of deck **122.** A top surface of radiator **202** may include vents and/or service access to radiator **202**. Zones **12** and **14** positioned on either side of zone **13** may serve as emergency or primary exit paths, i.e., paths for exiting mining truck **100** and/or deck **122.**

The arrangement of components on the deck as described herein are exemplary in nature and may be altered within the scope of the disclosure. For example, in some embodiments, first region **188** and second region **190** may be mirrored or switched. In other embodiments, components may be moved relative to one another and/or relative to deck **122.**

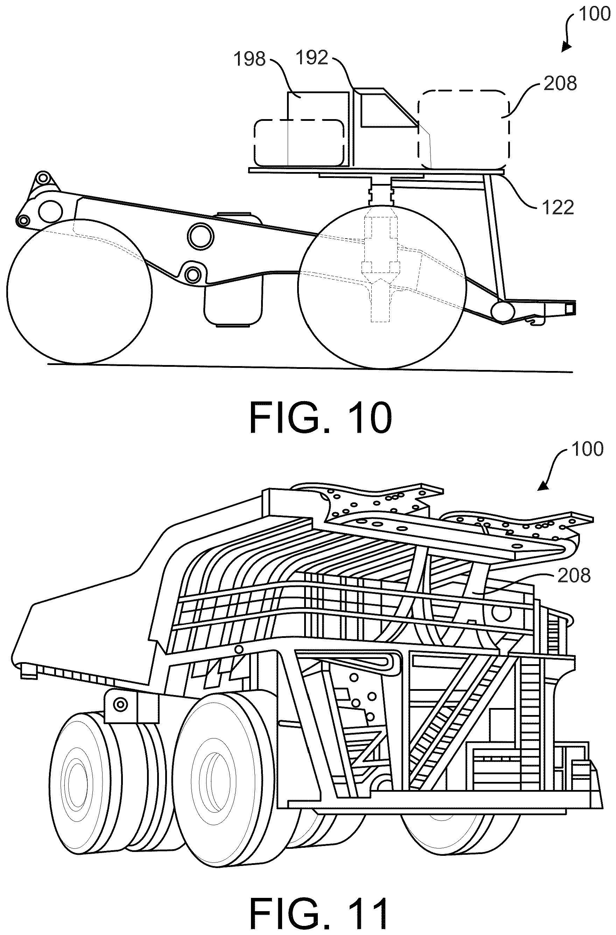

FIGS. **10-11** illustrate an embodiment of mining truck **100** including an on-board trolley system **208**, such as a pantograph. As described above, a space forward of inverter cabinet **198** may be defined to receive or may already contain on-board trolley system **208** for connecting to an overhead trolley during operation of mining truck **100.** On-board trolley system **208**, for example, may facilitate connection of mining truck **100** to an overhead trolley to assist mining truck **100** with traversal of uphill and/or difficult trails or roads and/or when mining truck **100** is carrying heavy loads.

While the system and methods herein have been described by reference to various specific embodiments it should be understood that numerous changes may be made within the spirit and scope of the concepts described, accordingly, it is intended that the invention is not limited to the described embodiments but will have full scope defined by the language of the following claims.

Various aspects are described in this disclosure, which include, but are not limited to, the following aspects:
(1) A mining haul truck, including a chassis; a first wheel coupled to a first side of the chassis at a first forward position; a second wheel coupled to the first side of the chassis at a first rearward position, the first wheel and the second wheel defining a first space therebetween; a third wheel coupled to a second side of the chassis at a second forward position; a fourth wheel coupled to the second side of the chassis at a second rearward position, the third wheel and the fourth wheel defining a second space therebetween; a hydraulic tank coupled to the chassis within the second space; and a fuel tank coupled to the chassis within the second space.
(2) The mining haul truck of Aspect (1), further including a second fuel tank positioned in the second space.
(3) The mining haul truck of Aspect (2), further including a third fuel tank positioned in the first space.
(4) The mining haul truck of Aspect (1), further including a second fuel tank positioned in the first space.
(5) The mining haul truck of Aspect (1), further including a battery pack module coupled to the chassis in the first space.
(6) The mining haul truck of any one of Aspects (1)-(5), wherein the fuel tank contains diesel fuel.
(7) The mining haul truck of any one of Aspects (1)-(6), wherein the hydraulic tank is coupled to the chassis adjacent to the chassis at an interior position and the fuel tank is coupled to the chassis adjacent to the hydraulic tank at an exterior position so that the hydraulic tank is positioned between the chassis and the fuel tank.
(8) A mining haul truck, including: a chassis having a first longitudinal frame member on a first side of the chassis extending from a first end of the chassis to a second end of the chassis and a second longitudinal frame member on a second side of the chassis extending from the first end of the chassis to a second end of the chassis, the first longitudinal frame member and the second longitudinal frame member defining a first space therebetween; a first wheel coupled to a first side of the chassis at a first forward position; a second wheel coupled to the first side of the chassis at a first rearward position, the first wheel and the second wheel defining a second space therebetween; a third wheel coupled to a second side of the chassis at a second forward position; a fourth wheel coupled to the second side of the chassis at a second rearward position, the third wheel and the fourth wheel defining a third space therebetween; an internal combustion engine positioned in the first space; and a battery pack module coupled to the chassis within the second space.
(9) The mining haul truck of Aspect (8), further including at least one fluid tank coupled to the chassis within the third space.
(10) The mining haul truck of Aspect (9), wherein the at least one fluid tank includes a hydraulic tank and a fuel tank.
(11) The mining haul truck of any one of Aspects (8)-(10), wherein the battery pack module is coupled to a thermal management system and a DC/DC system.
(12) The mining haul truck of Aspect (11), wherein the thermal management system and the DC/DC system are supported by the chassis on a forward position thereof.
(13) The mining haul truck of any one of Aspects (8)-(12), wherein the battery pack module and the first wheel define a first clearance area therebetween.
(14) The mining haul truck of any one of Aspects (8)-(13), wherein the battery pack module and the second wheel define a second clearance area therebetween.
(15) The mining haul truck of any one of Aspects (8)-(14), wherein the battery pack module includes a plurality of battery pack layers in a vertical arrangement, each battery pack layer of the plurality of battery pack layers including at least one battery pack.
(16) A mining haul truck, including: a chassis supporting a deck on a forward position thereof; a resistor grid positioned in a first region associated with a first side of the deck; an operator cab positioned in a second region associated with a second side of the deck; a DC/DC system positioned in the first region in a forward position relative to the resistor grid, the DC/DC system and the resistor grid defining a space therebetween; and a thermal management system positioned at least partially in the space.
(17) The mining haul truck of Aspect (16), further including a radiator mounted on a first end portion of the chassis adjacent a first end of the chassis.
(18) The mining haul truck of any one of Aspects (16)-(17), further including an inverter cabinet positioned at a rearward position of the deck.
(19) The mining haul truck of Aspect (18), wherein the inverter cabinet is positioned partially in the first region and partially in the second region.
(20) The mining haul truck of any one of Aspects (16)-(19), wherein the deck defines a space at a forward position configured to receive an on-board trolley system.
(21) The mining haul truck of any one of Aspects (16)-(20), wherein the thermal management system is fluidly coupled to the DC/DC system
(22) A mining haul truck, including: a chassis supporting a deck on a forward portion thereof; a resistor grid positioned in a first region associated with a first side of the deck; an operator cab positioned in a second region associated with a second side of the deck; a DC/DC system positioned on the resistor grid; and a thermal management system positioned at least partially in the first region.
(23) The mining haul truck of Aspect (22), further including a radiator positioned at a full forward position of the deck.
(24) The mining haul truck of any one of Aspects (22)-(23), further including an inverter cabinet positioned at a rearward position of the deck.
(25) The mining haul truck of Aspect (24), wherein the inverter cabinet is positioned partially in the first region and partially in the second region.
(26) The mining haul truck of any one of Aspects (22)-(25), wherein the thermal management system is fluidly coupled to a battery pack module.
(27) The mining haul truck of Aspect (26), wherein the battery pack module is coupled to the chassis between a first wheel and a second wheel.
(28) The mining haul truck of Aspect (27), wherein the first wheel and the second wheel are both positioned on a first side of the chassis.
(29) The mining haul truck of any one of Aspects (22)-(28), wherein the thermal management system is positioned at a forward position relative to the resistor grid.
(30) The mining haul truck of any one of Aspects (22)-(29), wherein the deck defines a space at a forward position configured to receive an on-board trolley system.
(31) A mining haul truck, including: a chassis supporting a deck on a forward portion thereof; a resistor grid and a DC/DC system positioned in a first region associated with a first side of the deck; an operator cab positioned in a second region associated with a second side of the deck; and a floor space of the deck defined partially within the first region and partially within the second region, the floor space configured to receive an on-board trolley system.
(32) The mining haul truck of Aspect (31), wherein the DC/DC system is in a forward position relative to the resistor grid.
(33) The mining haul truck of Aspect (32), wherein the thermal management system is positioned at least partially between the DC/DC system and the resistor grid.
(34) The mining haul truck of any one of Aspects (31), wherein the DC/DC system is positioned on top of the resistor grid.
(35) The mining haul truck of any one of Aspects (31)-(34), further including an inverter cabinet positioned at a rearward position of the deck.
(36) The mining haul truck of Aspect (35), wherein the inverter cabinet is positioned partially in the first region and partially in the second region.
(37) The mining haul truck of any one of Aspects (31)-(36), further including a radiator positioned at a full forward position of the deck.
(38) A mining haul truck, including: a chassis supporting a deck on a forward position thereof, the deck having a first deck side corresponding with a first chassis side and a second deck side corresponding with a second chassis side; a battery pack module coupled to the first chassis side; and a thermal management system at least partially positioned on the first deck side, the thermal management system including a first fluid route to the battery pack module.
(39) The mining haul truck of Aspect (38), further including a hydraulic liquid tank coupled to the second chassis side.
(40) The mining haul truck of Aspect (39), further including a second liquid tank coupled to the second chassis side.
(41) The mining haul truck of Aspect (40), wherein the second liquid tank is a fuel tank.
(42) The mining haul truck of any one of Aspects (38)-(41), further including a DC/DC system positioned on the first deck side.
(43) The mining haul truck of Aspect (42), wherein the thermal management system includes a second fluid route to the DC/DC system.
(44) The mining haul truck of any one of Aspects (42)-(43), wherein the thermal management system is in a rearward position relative to the DC/DC system.
(45) The mining haul truck of any one of Aspects (43)-(44), further including a resistor grid in a rearward position relative to the DC/DC system.
(46) The mining haul truck of any one of Aspects (43)-(44), further including a resistor grid positioned beneath the DC/DC system.
(47) The mining haul truck of any one of Aspects (38)-(46), further including a radiator positioned at a full forward position of the deck.
(48) The mining haul truck of any one of Aspects (38)-(47), wherein the deck defines a space at a forward position configured to receive an on-board trolley system.
(49) A method of assembling a mining haul truck having a chassis, a first wheel and a second wheel mounted to a first side of the chassis, and a third wheel and a fourth wheel mounted to a second side of the chassis, the method including: mounting a hydraulic liquid tank to the chassis at a first position between the first wheel and the second wheel; and mounting a second liquid tank to the chassis at a second position between the first wheel and the second wheel.
(50) The method of Aspect (49), wherein the second liquid tank is a fuel tank.
(51) The method of any one of Aspects (49)-(50), further including mounting a third liquid tank to the chassis at a third position between the third wheel and the fourth wheel.
(52) The method of any one of Aspects (49)-(51), further including mounting a vehicle subsystem at a third position between the second wheel and the fourth wheel.
(53) The method of Aspect (52), wherein the vehicle subsystem is at least one of an aftertreatment system and an exhaust muffler.
(54) The method of any one of Aspects (49)-(53), wherein the hydraulic liquid tank is mounted to the chassis between the chassis and the second liquid tank.
(55) A method of assembling a mining haul truck having a chassis, a first wheel and a second wheel mounted to a first side of the chassis, and a third wheel and a fourth wheel mounted to a second side of the chassis, the method including: mounting a hydraulic tank to the chassis at a first position between the first wheel and the second wheel; and mounting a battery pack module to the chassis at a second position between the third wheel and the fourth wheel.
(56) The method of Aspect (55), further including mounting a second liquid tank to the chassis at a third position between the first wheel and the second wheel.
(57) The method of any one of Aspects (55)-(56), further including coupling the battery pack module to a thermal management system and a DC/DC system.
(58) The method of Aspect (57), wherein the thermal management system and the DC/DC system are supported by a deck, the deck supported by the chassis on a forward position thereof.
(59) The method of any one of Aspects (55)-(58), further including mounting a vehicle subsystem between the second wheel and the fourth wheel.
(60) The method of Aspect (59), wherein the vehicle subsystem is an aftertreatment system.
(61) A method of assembling a mining haul truck having a chassis, a deck supported by a forward portion of the chassis, a first wheel and a second wheel mounted to a first side of the chassis, and a third wheel and a fourth wheel mounted to a second side of the chassis, the method including: mounting a resistor grid on the deck at a first position; and mounting a thermal management system on the deck at a second position forward of the resistor grid.
(62) The method of Aspect (61), further including mounting a DC/DC system in a forward position relative to the resistor grid.
(63) The method of Aspect (62), wherein mounting the DC/DC system in the forward position relative to the resistor grid includes mounting the DC/DC system in a forward position relative to the thermal management system.
(64) The method of Aspect (61), further including mounting a DC/DC system on top of the resistor grid.
(65) The method of any one of Aspects (61)-(64), further including fluidly coupling the thermal management system to a battery pack module.
(66) The method of Aspect (65), further including mounting the battery pack module to the chassis at a first position between the first wheel and the second wheel.
(67) The method of any one of Aspects (61)-(66), further including mounting an on-board trolley system to the deck.

## Claims

1. A mining haul truck, comprising:
a chassis;
a first wheel coupled to a first side of the chassis at a first forward position;
a second wheel coupled to the first side of the chassis at a first rearward position, the first wheel and the second wheel defining a space therebetween;
a third wheel coupled to a second side of the chassis at a second forward position;
a fourth wheel coupled to the second side of the chassis at a second rearward position, the third wheel and the fourth wheel defining a space therebetween;
a hydraulic tank coupled to the chassis within the space defined between the third wheel and the fourth wheel; and
a fuel tank coupled to the chassis within the space defined between the third wheel and the fourth wheel.

2. The mining haul truck of claim 1, further comprising a second fuel tank positioned in the space defined between the third wheel and the fourth wheel.

3. The mining haul truck of claim 2, further comprising a third fuel tank positioned in the space defined between the first wheel and the second wheel.

4. The mining haul truck of claim 1, further comprising a second fuel tank positioned in the space defined between the first wheel and the second wheel.

5. The mining haul truck of any one of the preceding claims, further comprising a battery pack module coupled to the chassis in the space defined between the first wheel and the second wheel.

6. The mining haul truck of any one of the preceding claims, wherein the hydraulic tank is coupled to the chassis adjacent to the chassis at an interior position and the fuel tank is coupled to the chassis adjacent to the hydraulic tank at an exterior position so that the hydraulic tank is positioned between the chassis and the fuel tank.

7. A mining haul truck as claimed in claim 1,
the chassis having a first longitudinal frame member on a first side of the chassis extending from a first end of the chassis to a second end of the chassis and a second longitudinal frame member on a second side of the chassis extending from the first end of the chassis to a second end of the chassis, the first longitudinal frame member and the second longitudinal frame member defining a space therebetween;
the mining haul truck further comprising an internal combustion engine positioned in the space defined between_first longitudinal frame member and the second longitudinal frame member; and
a battery pack module coupled to the chassis within the space defined between the first wheel and the second wheel.

8. The mining haul truck of claim 7, wherein the battery pack module is coupled to a thermal management system and a DC/DC system, and optionally wherein the thermal management system and the DC/DC system are supported by the chassis on a forward position thereof.

9. The mining haul truck of claim 7 or claim 8, wherein the battery pack module and the first wheel define a first clearance area therebetween, and/or wherein the battery pack module and the second wheel define a second clearance area therebetween.

10. The mining haul truck of any one of claims 7 to 9, wherein the battery pack module includes a plurality of battery pack layers in a vertical arrangement, each battery pack layer of the plurality of battery pack layers including at least one battery pack.

11. A mining haul truck as claimed in claim 1, wherein
the chassis supports a deck on a forward position thereof;
and wherein the mining haul truck further comprises a resistor grid positioned in a first region associated with a first side of the deck;
an operator cab positioned in a second region associated with a second side of the deck;
a DC/DC system positioned in the first region in a forward position relative to the resistor grid, the DC/DC system and the resistor grid defining a space therebetween; and
a thermal management system positioned at least partially in the space defined between the DC/DC system and the resistor grid.

12. The mining haul truck of claim 11, further comprising a radiator mounted at a first end portion of the chassis adjacent a first end of the chassis.

13. The mining haul truck of claim 11 or claim 12, further comprising an inverter cabinet positioned at a rearward position of the deck and optionally partially in the first region and partially in the second region.

14. The mining haul truck of any one of claims 11 to 13, wherein the deck defines a space at a forward position configured to receive an on-board trolley system.

15. The mining haul truck of any one of claims 11 to 14, wherein the thermal management system is fluidly coupled to the DC/DC system.
